# EUROPÄISCHE PATENTSCHRIFT

(11) **EP 3 839 616 B1**
(45) Veröffentlichungstag und Bekanntmachung des Hinweises auf die Patenterteilung: **24.01.2024**
(21) Anmeldenummer: 20206860.7
(22) Anmeldetag: 11.11.2020
(51) Int. Cl.: G02F 1/01, E06B 3/67

(54) **VERBUNDSCHEIBENELEMENT, DIESES UMFASSENDES FENSTER SOWIE VERFAHREN ZU DESSEN HERSTELLUNG**
COMPOSITE PANEL ELEMENT, WINDOW COMPRISING THE SAME AND METHOD FOR THE PRODUCTION THEREOF
ÉLÉMENT DE VITRE COMPOSITE, FENÊTRE LE COMPRENANT AINSI QUE SON PROCÉDÉ DE FABRICATION

(30) Priorität: 20.12.2019 DE 102019135413
(43) Veröffentlichungstag der Anmeldung: 23.06.2021
(73) Patentinhaber: REHAU Industries SE & Co. KG, 95111 Rehau (DE)
(72) Erfinder: Ranfeld, Constanze, 63225 Langen (DE); Ehrenpfordt, Ricardo, 08056 Zwickau (DE)

(56) Entgegenhaltungen:
- DE-A1-102004 005 611
- DE-A1-102004 049 091
- DE-A1-102004 050 987
- DE-A1-102014 012 383

## Beschreibung

Die vorliegende Erfindung betrifft ein Verbundscheibenelement mit bereichsweise elektrisch steuerbaren Lichtdurchlässigkeitseigenschaften, das ein erstes Scheibenelement und ein zweites Scheibenelement, wobei sich zwischen dem ersten Scheibenelement und dem zweiten Scheibenelement ein Zwischenraum befindet; und ein in dem Zwischenraum angeordnetes Funktionselement umfasst, das mindestens zwei Funktionszonen umfasst, deren Lichtdurchlässigkeitseigenschaften beim Anlegen einer elektrischen Spannung an die Funktionszone einzeln veränderbar sind und jede Funktionszone eine Kontaktstelle umfasst. Darüber hinaus betrifft die vorliegende Erfindung ein Fenster, das einen Fensterrahmen und mindestens ein darin aufgenommenes, derartiges Verbundscheibenelement umfasst, sowie ein Verfahren zur Herstellung eines derartigen Verbundscheibenelements.

Derartige Verbundscheibenelemente und Verfahren zur ihrer Herstellung sind im Stand der Technik bekannt. Dabei erfolgt die Kontaktierung der einzelnen Funktionszonen derzeit mittels eines Kupferklebebands (Busbar) sowie zusätzlichem Aufbringen von Kupferfähnchen und Anlöten von Drähten/Kabeln in manueller Fertigung für jede Funktionszone einzeln. Dieser manuelle Fertigungsprozess ist mit einem hohen Zeitaufwand verbunden und ist daher sehr kostenintensiv und zudem schlecht reproduzierbar. Darüber hinaus neigen die angeklebten Kontaktierungsfähnchen dazu, von der jeweiligen Funktionszone abzurei-βen, sodass das erhaltene Verbundscheibenelement nur eine geringe Robustheit besitzt. Ein weiteres derartiges Verbundscheibenelement ist beispielsweise aus DE 10 2004 050 987 A1 bekannt. Die Kontaktierung der Funktionszonen erfolgt gemäß dieser Schrift über einzelne Leitungen, die außerhalb der Scheibe über eine Mehrfachleitung abgeführt werden. Weitere Verbundscheibenelemente mit bereichsweise elektrisch steuerbaren Lichtdurchlässigkeitseigenschaften sind aus der DE 10 2014 012 383 A1, der DE 10 2004 049 091 A1 und der DE10 2004 005 611 A1 bekannt.

Dementsprechend liegt der vorliegenden Erfindung die Aufgabe zugrunde, ein Verbundscheibenelement zur Verfügung zu stellen, das die Nachteile des Stands der Technik zumindest teilweise überwindet. Insbesondere soll das erfindungsgemäße Verbundscheibenelement gut reproduzierbar und damit maschinell herstellbar sein sowie eine hohe Robustheit besitzen. Ferner liegt die Aufgabe der vorliegenden Erfindung in der Bereitstellung eines Fensters, das mindestens ein erfindungsgemäßes Verbundscheibenelement umfasst, sowie in der Bereitstellung eines Verfahrens zur Herstellung eines erfindungsgemäßen Verbundscheibenelements.

Diese und andere Aufgaben werden erfindungsgemäß durch ein Verbundscheibenelement mit den Merkmalen des Anspruchs 1, durch ein Fenster den Merkmalen des Anspruchs 11 sowie durch ein Verfahren mit den Merkmalen des Anspruchs 12 gelöst. Bevorzugte Ausführungsformen der vorliegenden Erfindung sind in den abhängigen Ansprüchen beschrieben.

Gemäß der vorliegenden Erfindung wurde erkannt, dass der Prozess der Kontaktierung der Funktionsbereiche dadurch gut reproduzierbar und daher maschinell erfolgen kann, wenn diese Kontaktierung durch ein vorgefertigtes Element für mehrere, insbesondere alle Funktionsbereich eines Verbundscheibenelements gleichzeitig erfolgt. Erfindungsgemäß wird dies dadurch realisiert, dass die Kontaktierung mittels eines Leitungsträgers erfolgt. Dieser Leitungsträger hat mehrere Kontaktbereiche, so dass mehrere Funktionselemente vom Leitungsträger kontaktiert werden können. Diese Kontaktbereiche sind so entlang des Leitungsträgers angeordnet, dass die einzelnen Kontaktstellen des Funktionselements jeweils einen Kontaktbereich des Leitungsträgers kontaktieren. Ein derartiger Leitungsträger kann gut zwischen den Scheibenelementen oder am Rand der Scheibenelemente angeordnet werden und trägt so zur Robustheit der Kontaktierung bei.

Dementsprechend liegt die vorliegende Erfindung in der Bereitstellung einer Verbundscheibenelement mit bereichsweise elektrisch steuerbaren Lichtdurchlässigkeitseigenschaften, das ein erstes Scheibenelement und ein zweites Scheibenelement, wobei sich zwischen dem ersten Scheibenelement und dem zweiten Scheibenelement ein Zwischenraum befindet; und ein in dem Zwischenraum angeordnetes Funktionselement umfasst, das mindestens zwei Funktionszonen umfasst, deren Lichtdurchlässigkeitseigenschaften beim Anlegen einer elektrischen Spannung an die Funktionszone einzeln veränderbar sind und jede Funktionszone eine Kontaktstelle umfasst, wobei sich das Verbundscheibenelement erfindungsgemäß dadurch auszeichnet, dass es weiter einen Leiterträger umfasst, der mindestens eine der Anzahl der Funktionszonen entsprechende Anzahl an Kontaktbereichen und zu jedem Kontaktbereich ein diesem Kontaktbereich zugeordnetes Leitungselement umfasst, wobei jede Kontaktstelle des Funktionselements durch einen Kontaktbereich des Leiterträgers kontaktiert ist. Weiter bezieht sich die vorliegende Erfindung auf ein Fenster, das einen Fensterrahmen und mindestens ein darin aufgenommenes, erfindungsgemäßes Verbundscheibenelement umfasst. Letztlich stellt die vorliegende Erfindung auch ein Verfahren zur Herstellung eines Verbundscheibenelements zur Verfügung mit bereichsweise elektrisch steuerbaren Lichtdurchlässigkeitseigenschaften, das die folgenden Stufen umfasst:
(a) Bereitstellen eines ersten Scheibenelements und eines zweiten Scheibenelements;
(b) Aufbringen eines Funktionselements auf das erste Scheibenelement, wobei das Funktionselements mindestens zwei Funktionszonen umfasst, deren Lichtdurchlässigkeitseigenschaften beim Anlegen einer elektrischen Spannung an die Funktionszone einzeln veränderbar sind und jede Funktionszone in einem Randbereich des ersten Scheibenelements eine Kontaktstelle umfasst;
(c) Aufbringen eines Leiterträgers, der mindestens eine der Anzahl der Funktionszonen entsprechende Anzahl an Kontaktbereichen und zu jedem Kontaktbereich ein diesem Kontaktbereich zugeordnetes Leitungselement umfasst, wobei jede Kontaktstelle des Funktionselements durch den der entsprechenden Funktionszone zugeordneten Kontaktbereich des Leiterträgers kontaktiert wird; und
(d) Aufbringen des zweiten Scheibenelements unter Erhalt des Verbundscheibenelements.

Wie hierin verwendet bezieht sich der Begriff "Fenster" bevorzugt auf ein Kunststofffenster. Es kommen aber auch Metallfenster, Holzfenster sowie Verbundfenster in Betracht. Handelt es sich um ein Kunststofffenster, so ist als Hauptmaterial der Rahmenprofile des erfindungsgemäßen Fensters Polyvinylchlorid (PVC), insbesondere Hart-PVC (PVC-U) oder glasfaserverstärktes PVC, das jeweils auch nachchloriertes PVC (PVC-C) enthalten kann und dem zusätzlich Zusatzstoffe wie z. B. Stabilisatoren, Weichmacher, Pigmente und dergleichen zugesetzt sind, bevorzugt. Durch Verschweißen von auf Gehrung geschnittenen Stücken der Rahmenprofile kann ein Fensterrahmen erhalten werden.

In bevorzugten Ausführungsformen des erfindungsgemäßen Verbundscheibenelements sind die Kontaktstellen des Funktionselements im Zwischenraum zwischen den Scheibenelementen angeordnet. Damit liegen die Kontaktstellen des Funktionselements geschützt zwischen den Scheibenelementen des erfindungsgemäßen Verbundscheibenelements, was dessen Robustheit weiter erhöht.

Zusätzlich oder alternativ dazu können zumindest die Kontaktbereiche des Leiterträgers im Zwischenraum angeordnet sein. Zum einen macht dies die Kontaktstellen des Funktionselements besser zugänglich, wenn diese ebenfalls im Zwischenraum zwischen den Scheibenelementen, zum anderen erhöht dies die Robustheit des erfindungsgemäßen Verbundscheibenelements weiter.

Ebenso kann es von Nutzen sein, wenn die Leitungselemente des Leiterträgers mindestens zwei voneinander elektrisch isolierte, schichtartige Metalllagen aufweisen. Dadurch ist gewährleistet, dass der Leiterträger eine geringe Breite aufweisen kann und besonders vorteilig zumindest teilweise zwischen den Scheibenelementen angeordnet werden kann, um die Robustheit des erfindungsgemäßen Verbundscheibenelements weiter zu erhöhen.

Es kann auch bevorzugt sein, wenn der Leiterträger zusätzliche Kontaktbereiche mit einem gemeinsamen Leitungselement aufweist, welche eine weitere Kontaktstelle jedes Funktionselements kontaktieren. Damit ist es möglich, mittels des Leiterträgers auch den gemeinsamen, zusätzlich notwendigen Kontakt aller Funktionszonen ("Common-Contact") zu kontaktieren.

Bevorzugt ist das das Funktionselement als SPD-Funktionselement, PDLC-Funktionselements, EC-Funktionselement oder als Kombination der vorgenannten Funktionselemente ausgebildet. Derartige Funktionselemente stellen die gängigen aktiven Schichten dar, deren optischen Eigenschaften, wie beispielsweise Milchigkeit und/oder Transparenz, durch Variieren einer das Funktionselement angelegten Spannung verändert werden können. Bei SPD-Funktionselementen sind in einer aktiven Schicht lichtabsorbierende oder lichtreflektierende Partikel, vorzugsweise mit einem mittleren Durchmesser von weniger als 1 µm, in einer Flüssigkeit suspendiert. Beidseitig der Suspension befindet sich eine transparente, leitfähige Schicht (z. B. Indium-Zinn-Oxid, ITO). Beim Anlegen einer Spannung richten sich die suspendierten Partikel aus. Dadurch wird das Funktionselement durchsichtig. Als Beispiele für SPD-Funktionselemente (suspended particle device) können beispielsweise die in der EP 0 876 608 B1 und der WO 2011/033313 A1 beschriebenen Elemente angeführt werden. Bei einem PDLC-Funktionselement (polymer dispersed liquid crystal) sind als aktive Schicht Flüssigkristalle in eine Polymermatrix eingebettet. Auf beiden Seiten dieser aktiven Schicht ist wieder jeweils eine transparente, leitfähige Schicht (z. B. Indium-Zinn-Oxid, ITO) angeordnet. Die Flüssigkristalle bewirken eine starke Streuung des durch die aktive Schicht scheinenden Lichts, das Funktionselement ist undurchsichtig bzw. opak. Beim Anlegen einer Spannung richten sich die Flüssigkristalle zueinander aus, so dass die Lichttransmission durch das Funktionselement erhöht wird. Das Funktionselement wird transparent. Ein EC-Funktionselement (electrochromic device) ist durchsichtig, wenn keine Spannung an das Funktionselement angelegt. Beim Anlegen einer Spannung ändern sich die optischen Eigenschaften, insbesondere die Farbe des Funktionselements, durch einen reversiblen chemischen Prozess. Das EC-Funktionselement bleibt bei Anlegen einer Spannung transparent, erscheint aber dunkler. Der Grad der Verdunkelung kann durch Variieren der angelegten Spannung kontinuierlich eingestellt werden.

Es kann auch hilfreich sein, wenn der Leiterträger ein Anschlusselement umfasst, das außerhalb des Zwischenraums angeordnet ist. Dieser vereinfacht den Anschluss des erfindungsgemäßen Verbundscheibenelements an eine Steuereinrichtung, beispielsweise einen Controller, beträchtlich. Dabei kann es sich auch als günstig erweisen, wenn das Anschlusselement eine der Anzahl von Leitungselementen des Leiterträgers entsprechende Anzahl von Anschlussstellen aufweist. Dies trägt wieder zu einem einfachen Verbinden der Komponenten bei.

In vorteilhaften Ausgestaltungen des erfindungsgemäßen Verbundscheibenelements weist der Leiterträger den Kontaktbereichen zugeordnete elektronische Einheiten auf, welche die Leitungselemente der Kontaktbereiche zu einem gemeinsamen busbasierten Leitungsbereich bündeln. Dadurch ist es möglich, die Anzahl von Leitungselementen, welche über den Leiterträger zum Anschlusselement geführt sind, sowie die Anzahl von Anschlussstellen des Anschlusselementes und die Anzahl von Anschlussstellen an der Steuereinrichtung deutlich zu reduzieren. Die Baugrößen aller Komponenten werden dadurch erheblich reduziert.

Zusätzlich oder alternativ dazu kann es auch von Vorteil sein, wenn der Leiterträger weitere elektronische Bauelemente, insbesondere Sensoren, umfasst, die insbesondere zur Detektion von Beschleunigungen, Temperatur, Feuchte, Druck, Licht, Trübung, Schall, Luftqualität und dergleichen eingerichtet sind. Mittels der Beschleunigungs- und/oder Schallsensorik kann es u.a. möglich sein, mechanische Einwirkungen auf das erfindungsgemäße Verbundscheibenelement im Falle eines Einbruchs zu detektieren. Mittels der Temperatur-, Feuchte-, Druck- und Lichtqualitätssensorik kann ein Klimamonitoring umgesetzt werden. So kann es u.a. sinnvoll sein, innerhalb einer Regelkette die Funktionselemente auf Basis von gemessenen Temperaturen zu schalten, um u.a. eine zu starke Erwärmung eines Raumes zu verhindern oder diese zu ermöglichen. Mittels der Lichtsensorik kann es möglich sein, innerhalb einer Regelkette die Funktionselemente auf Basis des gemessenen Lichteinfalls automatisch zu schalten. Zusätzlich kann es möglich sein, mittels der Licht- und Trübungssensorik die einwandfreie Funktion der Funktionselemente und des gesamten Systems bis zum Controller nach Installation und über Lebensdauer zu überwachen.

Hinsichtlich des erfindungsgemäßen Fensters ist es bevorzugt, wenn das erfindungsgemä-ße Verbundscheibenelement eine Scheibe einer Isolierverglasung bildet, die durch einen oder mehrere Randverbunde mit einer oder mehreren weiteren Scheiben zu der Isolierverglasung zusammengefügt sind. Grundsätzlich ist es aber auch denkbar, dass das erfindungsgemäße Verbundscheibenelement als alleiniges Verglasungselement in dem erfindungsgemäßen Fenster eingesetzt wird.

Die Scheibenelemente sind vorzugsweise aus Glas, insbesondere aus Floatglas, Quarzglas, Flachglas, Kalk-Natron-Glas, Borosilikatglas, oder aus klaren Kunststoffe, wie beispielsweise Polycarbonat (PC) oder Polymethylmethacrylat (PMMA). Die Scheibenelemente sind bevorzugt klar und transparent, können aber auch getönt oder gefärbt sein. Die Scheibenelemente besitzen eine Dicke von vorzugsweise 1 mm bis 5 mm. Grundsätzlich kann das erfindungsgemäße Verbundscheibenelement eine beliebige Form besitzen, wobei rechteckige Ausgestaltungen bevorzugt sind. Das erfindungsgemäße Verbundscheibenelement ist vorzugsweise im Wesentlichen eben oder leicht oder stark gebogen.

Das Funktionselement weist elektrisch steuerbare optische Eigenschaften auf und ist in mindestens zwei Funktionszonen untergliedert. Zentraler Bestanteil jeder Funktionszone ist dabei eine aktive Schicht, die je nach Art des Funktionselements unterschiedlich ist. In bevorzugten Ausführungsformen der vorliegenden Erfindung ist das Funktionselement als PDLC-Funktionselement ausgebildet. In der aktiven Schicht sind dann unausgerichtete Flüssigkristalle in einer Polymermatrix enthalten. Dies resultiert in einer starken Streuung des durchscheinenden Lichts. Ohne angelegte elektrische Spannung zeichnet sich das PDLC-Funktionselement durch ein weißes, milchiges Aussehen aus, das beispielsweise als Sichtschutz dienen kann. Wird an die aktive Schicht eine elektrische Spannung angelegt, richten sich die Flüssigkristalle in eine Richtung aus und die Transmission von Licht durch die aktive Schicht wird erhöht. Das erfindungsgemäße Verbundscheibenelement wird dadurch transparent. Auf beiden Seiten der aktiven Schicht befindet sich jeweils eine als Flächenelektrode fungierende elektrisch leitfähige Beschichtung. Die elektrisch leitfähigen Beschichtungen sind transparent. Dabei kann es sich bevorzugt um Schichten aus ITO (Indium-Zinn-Oxid) handeln, die häufig nur wenige Nanometer dick sind. Daran schließen sich beidseitig Trägerfolien an, bei denen es sich bevorzugt um Polymerfolien, insbesondere um PET-Folien handelt. Die Dicke der Trägerfolien liegt im Bereich von 0,02 mm bis 3 mm, vorzugsweise im Bereich von 0,25 mm bis 1 mm. Die Außenseiten des Funktionselements und damit die Verbindung zu den Scheibenelementen bilden häufig Zwischenschichten. Bei den Zwischenschichten handelt es sich bevorzugt um thermoplastische Kunststofffolien, insbesondere um Folien aus Polyvinylbutyral (PVB) mit einer Dicke im Bereich von 0,02 mm bis 3 mm, vorzugsweise im Bereich von 0,25 mm bis 1 mm.

In Bezug auf das erfindungsgemäße Herstellungsverfahren ist anzumerken, dass die Abfolge der Stufen des erfindungsgemäßen Verfahrens auch in einer anderen Reihenfolge durchgeführt werden können, ohne den Umfang der Erfindung zu verlassen. So ist es beispielsweise auch denkbar, zunächst die Kontaktstellen des Funktionselements mit den entsprechenden Kontaktbereichen des Leiterträgers zu kontaktieren und den dabei erhaltenen Verbund zwischen das erste Scheibenelement und das zweite Scheibenelement zu laminieren.

Dabei kann es bevorzugt sein, wenn das Kontaktieren der Kontaktstellen des Funktionselements mit den Kontaktbereichen des Leiterträgers unter Verwendung eines elektrisch leitfähigen Klebstoffs erfolgt. Dies macht das Kontaktieren besonders einfach und reproduzierbar. Es ist aber ebenso möglich, das Kontaktieren der Kontaktstellen des Funktionselements mit den Kontaktbereichen des Leiterträgers mittels Löten, Schweißen und/oder Crimpen zu bewerkstelligen.

In bevorzugten Ausführungsformen des erfindungsgemäßen Verfahrens sind die Leitungselemente des Leiterträgers an ein Anschlusselement des Leiterträgers geführt und werden mittels einem steckbaren Anschlusselement kontaktiert.

Das erfindungsgemäße Verbundscheibenelement, das erfindungsgemäße Fenster sowie einzelne Teile davon können auch zeilenweise oder schichtweise unter Verwendung eines zeilenaufbauenden oder schichtaufbauenden Fertigungsverfahrens (z. B. 3D-Druck) hergestellt werden, bevorzugt ist jedoch die Herstellung mittels Extrusion.

Im Folgenden soll die vorliegende Erfindung unter Bezugnahme auf die in den Figuren dargestellten Ausführungsformen im Detail erläutert werden. Dabei zeigen
- Figur 1: eine schematische Darstellung eines Verbundscheibenelements gemäß einer Ausführungsform der vorliegenden Erfindung;
- Figur 2: eine schematische gestauchte Querschnittsdarstellung einer Funktionszone eines Verbundscheibenelements gemäß der in Fig. 1 gezeigten Ausführungsform der vorliegenden Erfindung;
- Figur 3: einen vergrößerten Ausschnitt aus dem in Fig. 1 dargestellten erfindungsgemäßen Verbundscheibenelements; und
- Figur 4: eine schematische Darstellung eines Fensters, dass das in Fig. 1 gezeigte erfindungsgemäßen Verbundscheibenelement umfasst.

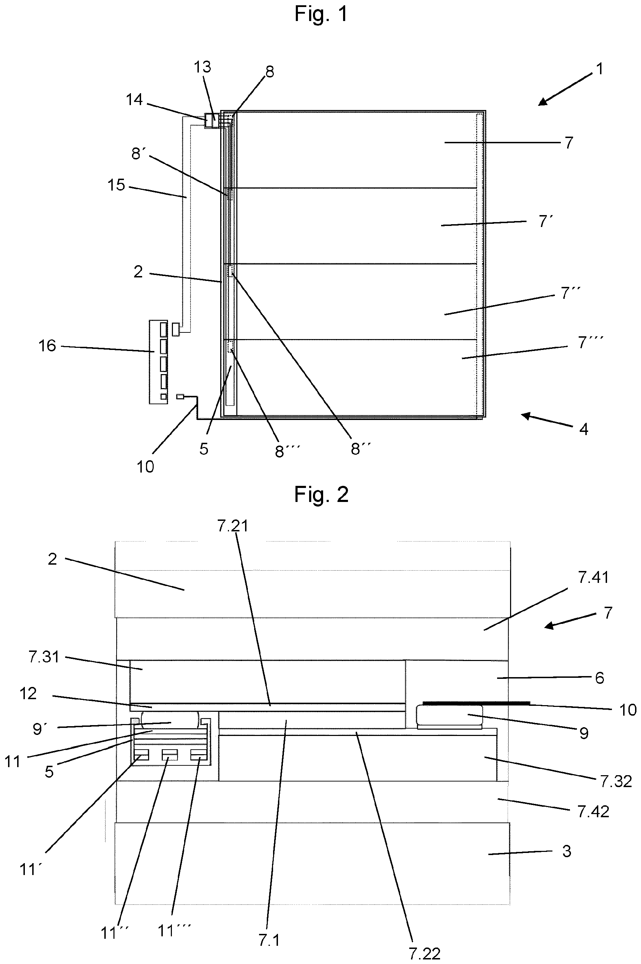

In Figur 1 ist ein Verbundscheibenelement 1 gemäß einer Ausführungsform der vorliegenden Erfindung in einer schematischen Darstellung gezeigt. Das erfindungsgemäße Verbundscheibenelement 1 umfasst ein erstes Scheibenelement 2, ein dahinter verborgenes, zweites Scheibenelement 3, das in Fig. 2 zu erkennen ist, ein Funktionselement 4 sowie einen Leiterträger 5. Dabei sind das Funktionselement 4 sowie der überwiegende Teil des Leiterträgers 5 in einem zwischen dem ersten Scheibenelement 2 und dem zweiten Scheibenelement 3 gebildeten Zwischenraum 6 angeordnet.

In der in Fig. 1 dargestellten Ausführungsform umfasst das Funktionselement 4 vier Funktionszonen 7, 7', 7", 7‴, wobei das Funktionselement 4 in anderen Ausführungsformen auch eine andere Anzahl an Funktionszonen 7, 7', 7", 7‴ umfassen kann. Jede der Funktionszonen 7, 7', 7", 7‴ umfasst dabei eine Kontaktstelle 8, 8', 8", 8"', an der die jeweilige Funktionszone 7, 7', 7", 7‴ mit dem Leiterträger 5 elektrisch leitend kontaktiert ist.

Der schematische Aufbau der Funktionszonen 7, 7', 7", 7‴ ist in Fig. 2 am Beispiel der Funktionszone 7 in einer Querschnittsdarstellung gezeigt. Dabei befindet sich die Funktionszone 7als Bestandteil des Funktionselements 4 im Zwischenraum 6 zwischen dem ersten Scheibenelement 2 und dem zweiten Scheibenelement 3. Das Funktionselement 4 ist in der beschriebenen Ausführungsform als PDLC-Funktionselement ausgebildet. Die beiden Scheibenelement 2 und ein zweites Scheibenelement 3 sind als Floatglas-Scheiben mit einer Dicke von 3 mm ausgebildet. Die Funktionszone 7 ist als eine Mehrschichtfolie ausgebildet, die eine aktive Schicht 7.1 umfasst. Auf beiden Seiten der aktiven Schicht 7.1 befindet sich jeweils eine als Flächenelektrode fungierende elektrisch leitfähige Beschichtung 7.21 und 7.22, die jeweils von einer Trägerfolie 7.31 und 7.32 abgedeckt sind. Bei der aktiven Schicht 7.1 handelt es sich in der dargestellten Ausführungsform um eine Polymermatrix mit darin dispergierten Flüssigkristallen, die sich in Abhängigkeit der an die Flächenelektroden angelegten elektrischen Spannung ausrichten können. So können die optischen Eigenschaften der Funktionszone 7 durch Variieren der an die elektrisch leitfähigen Schichten 7.21 und 7.22 angelegten Spannung verändert werden. Die Trägerfolien 7.31 und 7.32 sind in der gezeigten Ausführungsform PET-Folien mit einer Dicke von beispielsweise 60 µm. Die auf die Trägerfolien 7.31 und 7.32 aufgebrachten elektrisch leitfähigen Beschichtungen 7.21 und 7.22 weisen in Richtung der aktiven Schicht 7.1 und sind beispielsweise Schichten aus ITO, die eine Dicke von wenigen Nanometern aufweisen. Die elektrisch leitfähige Beschichtung 7.22 ist über einen elektrisch leitfähigen Klebstoff 9 mit einem an eine Stromversorgung angeschlossenen Leiter 10 verbunden. Entsprechend ist die elektrisch leitfähige Beschichtung 7.21 ebenfalls über einen elektrisch leitfähigen Klebstoff 9' mit dem Leitungselement 11 des Leiterträgers 5 verbunden. Zwischen dem Klebstoff 9, 9' und der leitfähigen Beschichtung 7.21 und 7.22 können weitere Schichten, z.B. eine Leitpaste, angeordnet sein. Die Trägerfolien 7.31 und 7.32 sind jeweils über Zwischenschichten 7.41 und 7.42 mit dem ersten Scheibenelement 2 bzw. dem zweiten Scheibenelement 3 verbunden. Bei den Zwischenschichten 7.41 und 7.42 handelt es sich beispielsweise um Folien aus Polyvinylbutyral (PVB) mit einer Dicke von 0,2 mm.

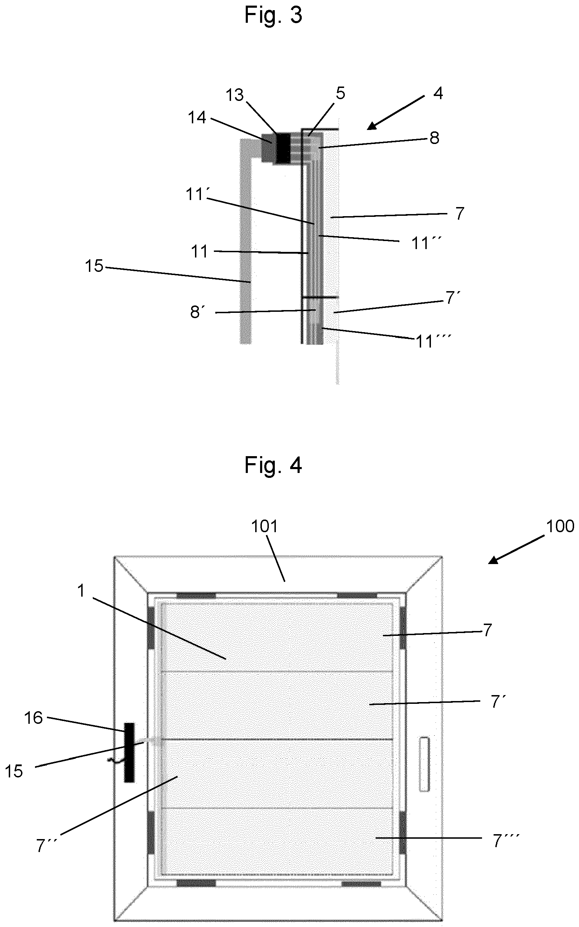

Der Leiterträger 5 ist in einem Randbereich der Scheibenelemente 2, 3 angeordnet und weist in der dargestellten Ausführungsform vier Leitungselemente 11, 11', 11", 11‴, denen jeweils ein Kontaktbereich 12, 12', 12", 12‴ zugeordnet ist. Vorzugsweise sind die Leitungselemente 11, 11', 11", 11‴ in Form mindestens zwei voneinander elektrisch isolierten, schichtartigen Metalllagen ausgebildet. In jedem der Kontaktbereich 12, 12', 12", 12‴ ist eines der Leitungselemente 11, 11', 11", 11‴ freiliegend. In Fig. 2 ist dabei der Kontaktbereich 12 gezeigt, in dem das Leitungselement 11 über den elektrisch leitenden Klebstoff 9' mit der elektrisch leitenden Schicht 7.21 in Kontakt steht. Die drei anderen Leitungselemente 11', 11", 11‴ des Leiterträger 5 sind räumlich getrennt und voneinander elektrisch isoliert geführt. In Fig. 3 ist dies für die Kontaktstellen 8 und 8' der Funktionszonen 7 und 7' in einem vergrößerten Ausschnitt aus Fig. 1 gezeigt.

Die Leitungselemente 11, 11', 11", 11‴ des Leiterträgers 5 münden in einem Anschlusselement 13. In dem Anschlusselement 13 befindet sich eine Aufnahme, in die ein Anschlussstück 14 eines Kabels 15 aufgenommen, insbesondere eingesteckt ist. Über das Kabel 15 ist das Funktionselement 4 an eine Steuereinrichtung 16 anschließbar, die beispielsweise als Controller ausgebildet ist. Die Steuereinrichtung 16 kann beispielsweise in der Armierungskammer eines Fensterflügels angeordnet werden. Die Steuereinrichtung 16 ist an eine externe Stromversorgung angeschlossen. Auch der Leiter 10 ist mit der Steuereinrichtung 16 verbindbar, so dass über den Controller eine variable Spannung an das Funktionselement 4 angelegt werden kann, über die die Lichtdurchlässigkeitseigenschaften des erfindungsgemäßen Verbundscheibenelements 1 variiert werden können.

Zur Herstellung des erfindungsgemäßen Verbundscheibenelements 1 wird das Funktionselement 4 zunächst in die Funktionszonen 7, 7', 7", 7‴ partitioniert, wobei in den Randbereichen die Trägerfolien 7.31 und 7.32 entfernt werden, so dass die elektrisch leitfähigen Beschichtungen 7.21 und 7.22 an diesen Stellen unter Bildung der Kontaktstellen 8, 8', 8", 8‴ freigelegt werden. Dann werden die Kontaktstellen 8, 8', 8", 8‴ gereinigt und eine Leitpaste wird auf sie aufgebracht. Dann wird der Leiterträger 5 derart auf den Randbereich aufgebracht, dass jede Kontaktstelle 8, 8', 8", 8‴ des Funktionselements 4 durch den der entsprechenden Funktionszone 7, 7', 7", 7‴ zugeordneten Kontaktbereich 12, 12', 12", 12‴ des Leiterträgers 5 kontaktiert wird. Das resultierende Funktionselement 4 wird dann abschließend zwischen die Scheibenelemente 2, 3 laminiert. Die beschriebene Vorgehensweise macht die Herstellung des erfindungsgemäßen Verbundscheibenelements 1 gut reproduzierbar, so dass dies auch maschinell erfolgen kann.

In Fig. 4 ist schematisch eine Ausführungsform eines erfindungsgemäßen Fenster 100 gezeigt. Dabei ist ein Verbundscheibenelement 1 in einen Fensterrahmen 101 aufgenommen, der in der dargestellten Ausführungsform lediglich als Flügelrahmen ausgebildet ist. Der so gebildete Fensterflügel liegt im geschlossenen Zustand des erfindungsgemäßen Fensters 100 über Dichtungen an einem nicht dargestellten Blendrahmen an und ist dabei über Beschlagmittel (nicht dargestellt) drehbar am Blendrahmen gelagert.

Die vorliegende Erfindung wurde exemplarisch unter Bezugnahme auf die in den Figuren dargestellten Ausführungsform der vorliegenden Erfindung beschrieben. Es versteht sich, dass die vorliegende Erfindung nicht auf die in den Figuren dargestellte Ausführungsform beschränkt ist, sondern sich der Umfang der vorliegenden Erfindung aus den beigefügten Ansprüchen ergibt.

## Patentansprüche

1. Verbundscheibenelement (1) mit bereichsweise elektrisch steuerbaren Lichtdurchlässigkeitseigenschaften, umfassend:
ein erstes Scheibenelement (2) und ein zweites Scheibenelement (3), wobei sich zwischen dem ersten Scheibenelement (2) und dem zweiten Scheibenelement (3) ein Zwischenraum (6) befindet; und
ein in dem Zwischenraum (6) angeordnetes Funktionselement (4), das mindestens zwei Funktionszonen (7, 7', 7", 7‴) umfasst, deren Lichtdurchlässigkeitseigenschaften beim Anlegen einer elektrischen Spannung an die Funktionszone (7, 7', 7", 7‴) einzeln veränderbar sind und jede Funktionszone (7, 7', 7", 7‴) eine Kontaktstelle (8, 8', 8", 8‴) umfasst;
**dadurch gekennzeichnet, dass**
das Verbundscheibenelement (1) weiter einen Leiterträger (5) umfasst, der mindestens eine der Anzahl der Funktionszonen (7, 7', 7", 7‴) entsprechende Anzahl an Kontaktbereichen (12, 12', 12", 12‴) und zu jedem Kontaktbereich (12, 12', 12", 12‴) ein diesem Kontaktbereich (12, 12', 12", 12‴) zugeordnetes Leitungselement (11, 11', 11", 11‴) umfasst, wobei jede Kontaktstelle (8, 8', 8", 8‴) des Funktionselements (4) durch einen Kontaktbereich (12, 12', 12", 12‴) des Leiterträgers (5) kontaktiert ist.

2. Verbundscheibenelement (1) gemäß Anspruch 1, **dadurch gekennzeichnet, dass** die Kontaktstellen (8, 8', 8", 8‴) des Funktionselements (4) im Zwischenraum (6) angeordnet sind.

3. Verbundscheibenelement (1) gemäß Anspruch 1 oder Anspruch 2, **dadurch gekennzeichnet, dass** zumindest die Kontaktbereiche (12, 12', 12", 12‴) des Leiterträgers (5) im Zwischenraum (6) angeordnet sind.

4. Verbundscheibenelement (1) gemäß einem der Ansprüche 1 bis 3, **dadurch gekennzeichnet, dass** die Leitungselemente (11, 11', 11", 11‴) des Leiterträgers (5) mindestens zwei voneinander elektrisch isolierte, schichtartige Metalllagen aufweisen.

5. Verbundscheibenelement (1) gemäß einem der Ansprüche 1 bis 4, **dadurch gekennzeichnet, dass** der Leiterträger (5) zusätzliche Kontaktbereiche mit einem gemeinsamen Leitungselement aufweist, welche eine weitere Kontaktstelle jeder Funktionszone (7, 7', 7", 7‴ kontaktieren.

6. Verbundscheibenelement (1) gemäß einem der Ansprüche 1 bis 5, **dadurch gekennzeichnet, dass** das Funktionselement (4) als SPD-Funktionselement, PDLC-Funktionselements, EC-Funktionselement oder als Kombination der vorgenannten Funktionselemente ausgebildet ist.

7. Verbundscheibenelement (1) gemäß einem der Ansprüche 1 bis 6, **dadurch gekennzeichnet, dass** der Leiterträger (5) ein Anschlusselement (13) umfasst, das außerhalb des Zwischenraums (6) angeordnet ist.

8. Verbundscheibenelement (1) gemäß Anspruch 7, **dadurch gekennzeichnet, dass** das Anschlusselement (12) eine der Anzahl von Leitungselementen (11, 11', 11", 11‴) des Leiterträgers (5) entsprechende Anzahl von Anschlussstellen aufweist.

9. Verbundscheibenelement (1) gemäß einem der Ansprüche 1 bis 8, **dadurch gekennzeichnet, dass** der Leiterträger (5) den Kontaktbereichen (12, 12', 12", 12‴) zugeordnete elektronische Einheiten aufweist, welche die Leitungselemente (11, 11', 11", 11‴) der Kontaktbereiche (12, 12', 12", 12‴) zu einem gemeinsamen busbasierten Leitungsbereich bündeln.

10. Verbundscheibenelement (1) gemäß einem der Ansprüche 1 bis 9, **dadurch gekennzeichnet, dass** der Leiterträger (5) weitere elektronische Bauelemente, insbesondere Sensoren, umfasst, die insbesondere zur Detektion von Beschleunigungen, Temperatur, Feuchte, Druck, Licht, Trübung, Schall, Luftqualität und dergleichen eingerichtet sind.

11. Fenster (100), umfassend einen Fensterrahmen (101) und mindestens ein darin aufgenommenes Verbundscheibenelement (1) gemäß einem der Ansprüche 1 bis 10.

12. Verfahren zur Herstellung eines Verbundscheibenelements (1) mit bereichsweise elektrisch steuerbaren Lichtdurchlässigkeitseigenschaften, das die folgenden Stufen umfasst:
(a) Bereitstellen eines ersten Scheibenelements (2) und eines zweiten Scheibenelements (3);
(b) Aufbringen eines Funktionselements (4) auf das erste Scheibenelement (2), wobei das Funktionselements (2) mindestens zwei Funktionszonen (7, 7', 7", 7‴) umfasst, deren Lichtdurchlässigkeitseigenschaften beim Anlegen einer elektrischen Spannung an die Funktionszone (7, 7', 7", 7‴) einzeln veränderbar sind und jede Funktionszone (7, 7', 7", 7‴) in einem Randbereich des ersten Scheibenelements (2) eine Kontaktstelle (8, 8', 8", 8‴) umfasst;
(c) Aufbringen eines Leiterträgers (5), der mindestens eine der Anzahl der Funktionszonen (7, 7', 7", 7‴) entsprechenden Anzahl an Kontaktbereichen (12, 12', 12", 12‴) und zu jedem Kontaktbereich (12, 12', 12", 12‴) ein diesem Kontaktbereich (12, 12', 12", 12‴) zugeordnetes Leitungselement (11, 11', 11", 11‴) umfasst, wobei jede Kontaktstelle (8, 8', 8", 8‴) des Funktionselements (4) durch den der entsprechenden Funktionszone (7, 7', 7", 7‴) zugeordneten Kontaktbereich (12, 12', 12", 12‴) des Leiterträgers (5) kontaktiert wird; und
(d) Aufbringen des zweiten Scheibenelements (3) unter Erhalt der Verbundscheiben (1).

13. Verfahren (1) gemäß Anspruch 12, **dadurch gekennzeichnet, dass** das Kontaktieren der Kontaktstellen (8, 8', 8", 8‴) des Funktionselements (4) mit den Kontaktbereichen (12, 12', 12", 12‴) des Leiterträgers (5) unter Verwendung eines elektrisch leitfähigen Klebstoffs erfolgt.

14. Verfahren gemäß Anspruch 12 oder Anspruch 13, **dadurch gekennzeichnet, dass** die Leitungselemente (11, 11', 11", 11‴) des Leiterträgers (5) an ein Anschlusselement (13) des Leiterträgers (5) geführt sind und mittels einem steckbaren Anschlussstück (14) kontaktiert werden.

## Claims

1. A composite pane element (1) having light transmission properties which are electrically controllable in regions, comprising:
a first pane element (2) and a second pane element (3), wherein there is a gap (6) between the first pane element (2) and the second pane element (3); and
a functional element (4) arranged in the gap (6) which comprises at least two functional zones (7, 7', 7" 7‴), the light transmission properties of which are individually changeable when an electrical voltage is applied to the functional zone (7, 7', 7", 7‴, and each functional zone (7, 7', 7", 7‴) comprises a contact point (8, 8', 8", 8‴);
**characterised in that**
the composite pane element (1) further comprises a conductor carrier (5) which comprises at least a number of contact regions (12, 12', 12", 12‴) which corresponds to the number of functional zones (7, 7', 7", 7‴) and for each contact region (12, 12', 12", 12‴) a line element (11, 11', 11", 11‴) associated with this contact region (12, 12', 12", 12‴), each contact point (8, 8', 8", 8‴) of the functional element (4) being contacted by a contact region (12, 12', 12", 12‴) of the conductor carrier (5).

2. A composite pane element (1) according to claim 1, **characterised in that** the contact points (8, 8', 8", 8‴) of the functional element (4) are arranged in the gap (6).

3. A composite pane element (1) according to claim 1 or claim 2, **characterised in that** at least the contact regions (12, 12', 12", 12‴) of the conductor carrier (5) are arranged in the gap (6).

4. A composite pane element (1) according to one of claims 1 to 3, **characterised in that** the line elements (11, 11', 11", 11‴) of the conductor carrier (5) have at least two layer-like metal layers electrically insulated from each other.

5. A composite pane element (1) according to one of claims 1 to 4, **characterised in that** the conductor carrier (5) has additional contact regions with a common line element which contact a further contact point of each functional zone (7, 7', 7", 7‴).

6. A composite pane element (1) according to one of claims 1 to 5, **characterised in that** the functional element (4) takes the form of an SPD functional element, a PDLC functional element, an EC functional element or a combination of the aforementioned functional elements.

7. A composite pane element (1) according to one of claims 1 to 6, **characterised in that** the conductor carrier (5) comprises a connection element (13) which is arranged outside the gap (6).

8. A composite pane element (1) according to claim 7, **characterised in that** the connection element (12) has a number of connection points which corresponds to the number of line elements (11, 11', 11", 11‴) of the conductor carrier (5).

9. A composite pane element (1) according to one of claims 1 to 8, **characterised in that** the conductor carrier (5) includes electronic units associated with the contact regions (12, 12', 12", 12‴), which units bundle the line elements (11, 11', 11", 11‴) of the contact regions (12, 12', 12", 12'") to form a common bus-based line region.

10. A composite pane element (1) according to one of claims 1 to 9, **characterised in that** the conductor carrier (5) comprises further electronic elements, in particular sensors, which are set up in particular for detecting accelerations, temperature, humidity, pressure, light, turbidity, noise, air quality and the like.

11. A window (100), comprising a window frame (101), and at least one composite pane element (1) according to one of claims 1 to 10 accommodated therein.

12. A method for producing a composite pane element (1) with light transmission properties which are electrically controllable in regions, which comprises the following stages:
(a) providing a first pane element (2) and a second pane element (3);
(b) applying a functional element (4) to the first pane element (2), wherein the functional element (2) comprises at least two functional zones (7, 7', 7", 7‴, the light transmission properties of which are individually changeable when an electrical voltage is applied to the functional zone (7, 7', 7", 7‴, and each functional zone (7, 7', 7", 7‴) comprises a contact point (8, 8', 8", 8‴) in an edge region of the first pane element (2);
(c) applying a conductor carrier (5) which comprises at least a number of contact regions (12, 12', 12", 12‴) which corresponds to the number of functional zones (7, 7', 7", 7‴) and for each contact region (12, 12', 12", 12‴) a line element (11, 11', 11", 11‴) associated with this contact region (12, 12', 12", 12‴), each contact point (8, 8', 8", 8'") of the functional element (4) being contacted by the contact region (12, 12', 12", 12'") of the conductor carrier (5) which is associated with the corresponding functional zone (7, 7', 7", 7‴); and
(d) applying the second pane element (3), obtaining the composite panes (1).

13. A method (1) according to claim 12, **characterised in that** the contacting of the contact points (8, 8', 8", 8‴) of the functional element (4) with the contact regions (12, 12', 12", 12'") of the conductor carrier (5) takes place using an electrically conductive adhesive.

14. A method according to claim 12 or claim 13, **characterised in that** the line elements (11, 11', 11", 11‴) of the conductor carrier (5) are guided onto a connection element (13) of the conductor carrier (5) and are contacted by means of a plug-in connection piece (14).

## Revendications

1. Élément de vitre composite (1) doté de propriétés de transparence pouvant, dans certaines zones, être commandées électriquement, comprenant :
un premier élément de vitre (2) et un second élément de vitre (3), un espace intermédiaire (6) étant situé entre le premier élément de vitre (2) et le second élément de vitre (3) ; et
un élément fonctionnel (4) agencé dans l'espace intermédiaire (6), qui comprend au moins deux zones fonctionnelles (7, 7', 7", 7‴), dont les propriétés de transparence peuvent être modifiées individuellement lors de l'application d'une tension électrique à la zone fonctionnelle (7, 7', 7", 7‴) et chaque zone fonctionnelle (7, 7', 7", 7‴) comprenant un point de contact (8, 8', 8", 8‴) ;
**caractérisé en ce que**
l'élément de vitre composite (1) comprend en outre un porte-conducteur (5) qui comprend au moins un nombre de zones de contact (12, 12', 12", 12‴) correspondant au nombre des zones fonctionnelles (7, 7', 7", 7‴) et pour chaque zone de contact (12, 12', 12", 12'") un élément de conduction (11, 11', 11", 11'") associé à ladite zone de contact (12, 12', 12", 12‴), chaque point de contact (8, 8', 8", 8'") de l'élément fonctionnel (4) étant mis en contact par une zone de contact (12, 12', 12", 12'") du porte-conducteur (5).

2. Élément de vitre composite (1) selon la revendication 1, **caractérisé en ce que** les points de contact (8, 8', 8", 8'") de l'élément fonctionnel (4) sont agencés dans l'espace intermédiaire (6).

3. Élément de vitre composite (1) selon la revendication 1 ou la revendication 2, **caractérisé en ce qu'**au moins les zones de contact (12, 12', 12", 12‴) du porte-conducteur (5) sont agencées dans l'espace intermédiaire (6).

4. Élément de vitre composite (1) selon l'une des revendications 1 à 3, **caractérisé en ce que** les éléments de conduction (11, 11', 11", 11‴) du porte-conducteur (5) présentent au moins deux couches métalliques superposées, électriquement isolées l'une de l'autre.

5. Élément de vitre composite (1) selon l'une des revendications 1 à 4, **caractérisé en ce que** le porte-conducteur (5) présente des zones de contact supplémentaires avec un élément de conduction commun, lesquelles sont mises en contact avec un autre point de contact de chaque zone fonctionnelle (7, 7', 7", 7'").

6. Élément de vitre composite (1) selon l'une des revendications 1 à 5, **caractérisé en ce que** l'élément fonctionnel (4) est réalisé sous la forme d'un élément fonctionnel SPD (dispositif à particules en suspension), d'un élément fonctionnel PDLC (cristaux liquides dispersés dans un polymère), d'un élément fonctionnel EC (électrochrome) ou sous la forme d'une combinaison des éléments fonctionnels ci-dessus.

7. Élément de vitre composite (1) selon l'une des revendications 1 à 6, **caractérisé en ce que** le porte-conducteur (5) comprend un élément de raccordement (13) qui est agencé en dehors de l'espace intermédiaire (6).

8. Élément de vitre composite (1) selon la revendication 7, **caractérisé en ce que** l'élément de raccordement (12) présente un nombre de points de raccordement correspondant au nombre d'éléments de conduction (11, 11', 11", 11‴) du porte-conducteur (5).

9. Élément de vitre composite (1) selon l'une des revendications 1 à 8, **caractérisé en ce que** le porte-conducteur (5) présente des unités électroniques associées aux zones de contact (12, 12', 12", 12‴), qui rassemblent les éléments de conduction (11, 11', 11", 11'") des zones de contact (12, 12', 12", 12'") pour former une zone de conduction commune basée sur un bus.

10. Élément de vitre composite (1) selon l'une des revendications 1 à 9, **caractérisé en ce que** le porte-conducteur (5) comprend d'autres composants électroniques, en particulier des capteurs, lesquels sont en particulier configurés pour détecter les accélérations, la température, l'humidité, la pression, la lumière, l'assombrissement, le son, la qualité de l'air et similaires.

11. Fenêtre (100), comprenant un châssis de fenêtre (101) et au moins un élément de vitre composite (1) selon l'une des revendications 1 à 10 reçu dans celui-ci.

12. Procédé de fabrication d'un élément de vitre composite (1) doté de propriétés de transparence pouvant, dans certaines zones, être commandées électriquement, comprenant les étapes suivantes :
(a) mise à disposition d'un premier élément de vitre (2) et d'un second élément de vitre (3) ;
(b) application d'un élément fonctionnel (4) sur le premier élément de vitre (2), l'élément fonctionnel (2) comprenant au moins deux zones fonctionnelles (7, 7', 7", 7‴), dont les propriétés de transparence peuvent être modifiées individuellement lors de l'application d'une tension électrique à la zone fonctionnelle (7, 7', 7", 7‴) et chaque zone fonctionnelle (7, 7', 7", 7‴) comprenant un point de contact (8, 8', 8", 8‴) dans une zone de bord du premier élément de vitre (2) ;
(c) application d'un porte-conducteur (5) qui comprend au moins un nombre de zones de contact (12, 12', 12", 12‴) correspondant au nombre des zones fonctionnelles (7, 7', 7", 7‴) et, pour chaque zone de contact (12, 12', 12", 12‴), un élément de conduction (11, 11', 11", 11'") associé à ladite zone de contact (12, 12', 12", 12‴), chaque point de contact (8, 8', 8", 8‴) de l'élément fonctionnel (4) étant mis en contact par une zone de contact (12, 12', 12", 12'") du porte-conducteur (5) associée à la zone fonctionnelle (7, 7', 7", 7‴) correspondante ; et
(d) application du second élément de vitre (3) permettant d'obtenir les vitres composites (1).

13. Procédé (1) selon la revendication 12, **caractérisé en ce que** la mise en contact des points de contact (8, 8', 8", 8'") de l'élément fonctionnel (4) avec les zones de contact (12, 12', 12", 12'") du porte-conducteur (5) est effectuée au moyen d'une colle électriquement conductrice.

14. Procédé selon la revendication 12 ou la revendication 13, **caractérisé en ce que** les éléments de conduction (11, 11', 11", 11‴) du porte-conducteur (5) sont guidés jusqu'à un élément de raccordement (13) du porte-conducteur (5) et sont mis en contact au moyen d'une pièce de raccordement (14) enfichable.
